## Europäisches Patentamt
## European Patent Office
## Office européen des brevets

(19)

(11) Veröffentlichungsnummer: **0 184 686**
**B1**

(12) ## EUROPÄISCHE PATENTSCHRIFT

(45) Veröffentlichungstag der Patentschrift:
**18.01.89**

(51) Int. Cl.⁴: **B 05 B 11/00**, G 01 F 11/02

(21) Anmeldenummer: **85114596.1**

(22) Anmeldetag: **16.11.85**

(54) **Schubkolben-Pumpe für Wirkstoff-Spender.**

(30) Priorität: **14.12.84 DE 3445562**

(43) Veröffentlichungstag der Anmeldung:
**18.06.86 Patentblatt 86/25**

(45) Bekanntmachung des Hinweises auf die Patenterteilung:
**18.01.89 Patentblatt 89/3**

(84) Benannte Vertragsstaaten:
**CH DE FR GB IT LI**

(56) Entgegenhaltungen:
**DE-A- 3 315 334**
**FR-A- 2 393 279**
**US-A- 4 139 122**

(73) Patentinhaber: **Ing. Erich Pfeiffer GmbH & Co. KG,**
**Josef-Bosch-Strasse 4, D-7760 Radolfzell (DE)**

(72) Erfinder: **Skorka, Thomas, Josef-Bosch-Strasse 5,**
**D-7760 Radolfzell (DE)**

(74) Vertreter: **Patentanwälte Ruff und Beier,**
**Neckarstrasse 50, D-7000 Stuttgart 1 (DE)**

## Beschreibung

Die Erfindung betrifft eine Schubkolben-Pumpe für Wirkstoff-Spender, zum wiederholbaren Ausbringen von Wirkstoffen, wie pharmazeutischen Zubereitungen, mit einem aus einer Ausgangslage über einen Pumphub in einem Pumpenzylinder geführten Pumpkolben, dessen zugehörige Pumpenkammer an zwei Kanäle, nämlich einerseits zur Wirkstoffansaugung über eine Vorsaugkammer eines Vorsaugkolbens an einen in einem Wirkstoff-Speicher anzuordnenden Ansaugkanal und andererseits für den Wirkstoffaustrag an einen Austragkanal angeschlossen ist, wobei die Pumpenkammer eingangsseitig nach Art eines schiebgesteuerten Ventils ausschliesslich bei einem an die Ausgangsstellung anschliessenden Teilhub des Pumphubes zur Vorsaugkammer des mit dem Pumpkolben laufenden Vorsaugkolbens geöffnet ist.

Bei einer bekannten Schubkolben-Pumpe (US-A-4 139 122) dieser Art wurde zur Erzielung der gewünschten Wirkung davon ausgegangen, dass sowohl vor Schliessen der Pumpenkammer durch den Pumpkolben als auch danach eine leicht atmende Entlüftung der Vorsaugkammer an der Pumpenkammer sowohl in den Speicherbehälter als auch ins Freie gegeben sein muss, weshalb für den Ansaugkanal bzw. für den Austragkanal dieser Pumpe zwingend eine ventilfreie Ausbildung vorgesehen ist. Dies ist auch für die Wirkungen beim Rückhub zwingend, da auf dem ersten Teil des Rückhubes eine Luftansaugung in die Pumpenkammer durch die Auslassöffnung für erforderlich gehalten und diese Luftansaugung dann durch den in die Pumpenkammer fliessenden Wirkstoff auf dem restlichen Teilrückhub nicht völlig verhindert, sondern nur reduziert wird. Zur Verhinderung des Auslaufens von Wirkstoff aus der Auslassöffnung weist diese bekannte Lösung nicht etwa ein Ventil, sondern lediglich eine entsprechende Verengung der Auslassöffnung oder eine genügend hohe Lage dieser Auslassöffnung auf.

Da der Auslasskanal bei der bekannten Ausbildung ständig belüftet ist, kann der Wirkstoff auch nicht schlagartig aus der Vorsaugkammer angesaugt werden, sondern die Pumpenkammer wird durch Vollgiessen unter Gravitationskraft in der Art gefüllt, in der man Flüssigkeit in ein Gefäss schüttet. Dadurch aber eignet sich diese bekannte Schubkolben-Pumpe im wesentlichen nur für den Betrieb in einer strikt aufrechten Lage, während sie z. B. in einer liegenden oder in einer Kopflage funktionsuntüchtig ist. Des weiteren ist eine exakt bemessene Füllung der Pumpenkammer kaum möglich, weshalb die je Pumphub ausgebrachte Wirkstoffmenge keiner genau bestimmbaren Dosierung entspricht.

Der Erfindung liegt die Aufgabe zugrunde, eine Schubkolben-Pumpe der genannten Art zu schaffen, die bei einfachem Aufbau eine hohe Sicherheit der Wiederfüllung der Pumpenkammer bei jedem Pumpzyklus und einen vollständigen Austrag der dem Pumphub entsprechenden Wirkstoffmenge gewährleistet.

Dies wird bei einer Schubkolben-Pumpe der eingangs genannten Art gemäss der Erfindung dadurch erreicht, dass einer der beiden Kanäle durch ein weiteres, differenzdruckabhängig, öffnendes Ventil schliessbar ist und dass die Pumpenkammer als bis vor Ende des Rückhubes geschlossene und am Ende des Rückhubes aus der Vorsaugkammer ansaugende Unterdruckkammer ausgebildet ist. Durch diese Ausbildung wird der Wirkstoff, nachdem die Pumpenkammer evakuiert und gegen Ende des Rückhubes geöffnet worden ist, schlagartig in die Pumpenkammer angesaugt, wobei sich eine schnelle und vollständige Füllung der Pumpenkammer im wesentlichen unabhängig von der Lage der Schubkolben-Pumpe ergibt. Da der Vorsaugkolben über den Pumphub, also zweckmässig auch über den Rückhub, stets zum Speicher hin offen sein kann, sorgt er für eine Voransaugung des Wirkstoffes, welche die Wiederfüllung der Pumpenkammer noch weiter verbessert. Während des eigentlichen, um den an die Ausgangsstellung anschliessenden Teil verkürzten Pumphubes kann der in der Pumpenkammer befindliche Wirkstoff in diesem Fall nur in einer einzigen möglichen Richtung, nämlich durch den Austragkanal entweichen, wobei für die Pumpenkammer kein gesondertes, ansaugseitiges Ventil erforderlich ist und somit die mit einem solchen Ventil verbundenen Leck- und Druckverluste ausgeschlossen werden können.

Es ist zwar auch eine Schubkolben-Pumpe bekannt (DE-A-1 290 043), welche ein nach einer vorbestimmten Pumphub-Strecke öffnendes Auslassventil aufweist, jedoch ist die Anordnung so vorgesehen, dass einer der beiden Kolben als Steuerkolben für das Auslassventil dient, wobei eine Vorsaugkammer nicht vorgesehen ist.

Eine besonders vorteilhafte Weiterbildung des Erfindungsgegenstandes besteht darin, dass das weitere Ventil als dem Austragkanal zugeordnetes, insbesondere mit der Öffnung eine fallende Federkennlinie aufweisendes Überdruckventil ausgebildet und vorzugsweise an dem Pumpkolben angeordnet ist, wobei insbesondere die der Kolbenlaufbahn für den Pumpkolben zugeordnete, die Pumpenkammer öffnende Dichtlippe des Pumpkolbens den zur Öffnung bewegbaren Ventilteil des weiteren Ventiles bildet. Durch die erfindungsgemässe Ausbildung wird nur ein einziges Ventil benötigt, an dessen Ventilschliessfläche im Gegensatz zu einem Rückschlagventil ohne Einbusse der Funktionssicherheit keine so hohen Genauigkeitsanforderungen zu stellen sind. Des weiteren bedarf es durch die erfindungsgemässe Ausbildung keiner mechanischen Öffnung des Auslassventiles, deren die Menge des ausgetragenen Wirkstoffes bestimmende Öffnungsphase in aller Regel davon abhängig ist, ob im Endabschnitt des Pumphubes die zur Ventilöffnung erforderliche Reststrecke gegen die dann stärker ansteigende Federkraft durchgeführt wird oder nicht. Davon aber ist es abhängig, ob die durch die Pumpenkammer bestimmte Dosiermenge vollständig ausgetragen wird, ob also die gewünschte Dosierung genau ist oder nicht.

Des weiteren ist es in vorteilhafter Weise möglich, das Ventil aus einer sehr geringen Anzahl von Teilen herzustellen. Beispielsweise kann einer der beiden gegeneinander beweglichen Ventilteile des weiteren Ventiles durch einen Abschnitt des Kolbens gebildet sein, wobei vorzugsweise der Pumpkolben eine im Bereich eines Endes die zugehörige Kolbendichtlippe bildende, den Austragkanal in ihrem Bereich am Aussenumfang begrenzende und am Kolbenschaft im Bereich des anderen Endes gelagerte Stauchhülse aufweist, die am Innenumfang einen ringförmigen Ventilschliessteil bildet, welchem ein Ventilsitz am Kolbenschaft zugeordnet ist. Der bewegliche Ventilteil ist also in diesem Fall unmittelbar durch den Pumpkolben bzw. die dichtlippenartige Kolbenmanschette gebildet, so dass für die Ventilausbildung kein gesonderter Teil erforderlich ist. Es ist aber auch möglich, das weitere Ventil als Schlauchventil auszubilden, das vorzugsweise durch einen elastischen, einen Ventilkörper, wie eine Kugel, mit Vorspannung umgebenden Abschnitt des Kolbenschaftes gebildet ist, so dass zur Ausbildung des Ventiles nur ein zusätzlicher Bauteil, beispielsweise eine einfache Kugel, erforderlich ist.

Eine besonders vorteilhafte Weiterbildung des Erfindungsgegenstandes besteht darin, dass der Pumpkolben in Ausgangsstellung das zugehörige, insbesondere konisch erweiterte und/oder mit Längsschlitzen versehene Ende der ansonsten vorzugsweise allseits geschlossenen Pumpenkammer nach Art einer Schiebersteuerung öffnet und dass vorzugsweise wenigstens dieses Ende der Pumpenkammer in der Vorsaugkammer liegt und über diese an den Ansaugkanal angeschlossen ist. Dadurch ergibt sich eine besonders sichere und schnelle Wiederfüllung der Pumpenkammer bei jedem Pumpzyklus.

In weiterer Ausgestaltung der Erfindung ist das offene Ende der Pumpenkammer zur Umflutung mit dem vorgesaugten Wirkstoff spaltartig von der Vorsaugkammer umgeben, wobei die Pumpenkammer vorzugsweise einen bis zu einer Bodenwand reichenden Mantel aufweist, der spaltartig von der Vorsaugkammer umgeben ist. Dadurch ergibt sich um die Pumpenkammer eine verhältnismässig grosse Aufnahmekapazität für den Wirkstoff bei kompakten Abmessungen und der Wirkstoff nimmt beim Öffnen der Pumpenkammer gegenüber deren offenen Ende eine günstige Lage insofern ein, als bei jeder Lage der Schubkolben-Pumpe dadurch eine vollständige Füllung der Pumpenkammer gewährleistet ist.

Nach einem weiteren Merkmal der Erfindung ist der Vorsaugkolben mit dem Pumpkolben gleichsinnig laufend angeordnet, so dass er durch eine sehr einfache mechanische Verbindung mit dem Pumpkolben betätigt werden kann. Des weiteren ist es zur Vereinfachung der Ausbildung der Pumpe vorteilhaft, wenn die Vorsaugkammer mit der Pumpenkammer so angeordnet ist, dass beide Kammern beim Pumphub simultan unter Überdruck gesetzt werden. Der Vorsaugkolben und der Pumpkolben können so auf einfache Weise an einem gemeinsamen, den Austragkanal enthaltenden Kolbenschaft angeordnet sein.

Zur weiteren Vereinfachung der Ausbildung der Pumpe ist die Pumpenkammer durch einen napfförmigen Kammerkörper gebildet, der vorzugsweise vollständig in der Vorsaugkammer bzw. im wesentlichen achsgleich zu dieser liegt und insbesondere als gesonderter Teil lagestabil gegenüber bzw. an der Innenfläche der Vorsaugkammer ausgerichtet ist. Der Kammerkörper, der hinsichtlich seines Mantels und seiner Bodenwandung zweckmässig vollständig geschlossen ausgebildet ist, ermöglicht eine sehr genaue Bestimmung des je Pumphub ausgebrachten Austragvolumens, kann raumsparend vollständig innerhalb der Druckkammer angeordnet werden und bietet als gesonderter Teil die Möglichkeit, dass Pumpen, die hinsichtlich ihrer übrigen Bauteile gleich ausgebildet sind, durch Wahl unterschiedlich gestalteter Kammerkörper und gegebenenfalls unterschiedlich gestalteter Pumpkolben an unterschiedliche Erfordernisse angepasst werden können. Der Kammerkörper kann auch einteilig mit dem Pumpengehäuse ausgebildet sein.

Bei einer weiter vereinfachten Ausführungsform des Erfindungsgegenstandes ist die Pumpenkammer ringspaltartig von der Vorsaugkammer umgeben und mit Wandabstand in der Vorsaugkammer angeordnet sowie vorzugsweise mit einen über den Umfang des Kammerkörpers vorstehenden, insbesondere in der Ebene von dessen Bodenwand liegenden, mindestens eine Durchtrittsöffnung aufweisenden Ringflansch im Bereich einer Innenschulter der Vorsaugkammer abgestützt.

Besonders günstige Druckverhältnisse sowohl für die Erstfüllung der Pumpe bei ihrem ersten Gebrauch wie auch für jede Wiederfüllung bei den Pumpzyklen ergeben sich, wenn der Vorsaugkolben einen grösseren Kolbenquerschnitt als der Pumpkolben aufweist, wodurch auch eine bauliche Vereinfachung möglich ist.

In weiterer Ausgestaltung der Erfindung liegen der Vorsaugkolben und der Pumpkolben, insbesondere in einem die Vorsaugkammer umschliessenden und an einem Ende in den Ansaugkanal übergehenden sowie am anderen Ende mit einer vom Kolbenschaft durchsetzten Gehäusekappe verschlossenen Pumpengehäuse hintereinander, wobei vorzugsweise der Pumpkolben näher beim Ansaugkanal liegt als der Vorsaugkolben. Bei einer solchen Ausbildung kann die Pumpe axial sehr kurz ausgestaltet werden.

Zweckmässig sind der Vorsaugkolben und der Pumpkolben mit einer beispielsweise einzigen gemeinsamen, insbesondere am Vorsaugkolben abgestützten Rückstellfeder zur Ausgangsstellung federbelastet, wobei vorzugsweise die Rückstellfeder in Form einer Schraubendruckfeder od. dgl. den Kammerkörper umgibt, so dass sich durch verhältnismässig lange Ausbildung dieser Druckfeder eine flache Federkennlinie über den gesamten Pumphub ergibt. Des weiteren kann mit der Rückstellfeder der Kammerkörper in einfacher Weise ohne jegliche zusätzlichen Befestigungsmittel dadurch in seiner Einbaulage gehalten werden, dass die Rückstellfeder den Kammerkörper gegen eine Abstützung drückt und dadurch gleichzeitig ihr zugehöriges Widerlager findet.

Weitere wesentliche Vereinfachungen im Aufbau der erfindungsgemässen Pumpe können dadurch erzielt werden, dass der Vorsaugkolben bzw. mindestens ein Kolben und der Kolbenschaft einteilig, z. B. aus einem gummielastischen Kunststoff, ausgebildet sind. Die gesamte Kolbenanordnung der Pumpe mit dem Ventil kann also aus nur zwei, höchstens drei Einzelteilen hergestellt werden.

Die Erfindung wird im folgenden mit weiteren Einzelheiten anhand der in den Zeichnungen dargestellten Ausführungsbeispielen näher erläutert. Es sind dargestellt in:

Fig. 1 eine erfindungsgemässe Schubkolben-Pumpe bei im Axialschnitt geöffnetem Pumpengehäuse;

Fig. 2 die Pumpe gemäss Fig. 1 in vergrösserter Darstellung im Axialschnitt;

Fig. 3 und 4 ein weiteres Ausführungsbeispiel in Darstellungen entsprechend den Fig. 1 und 2.

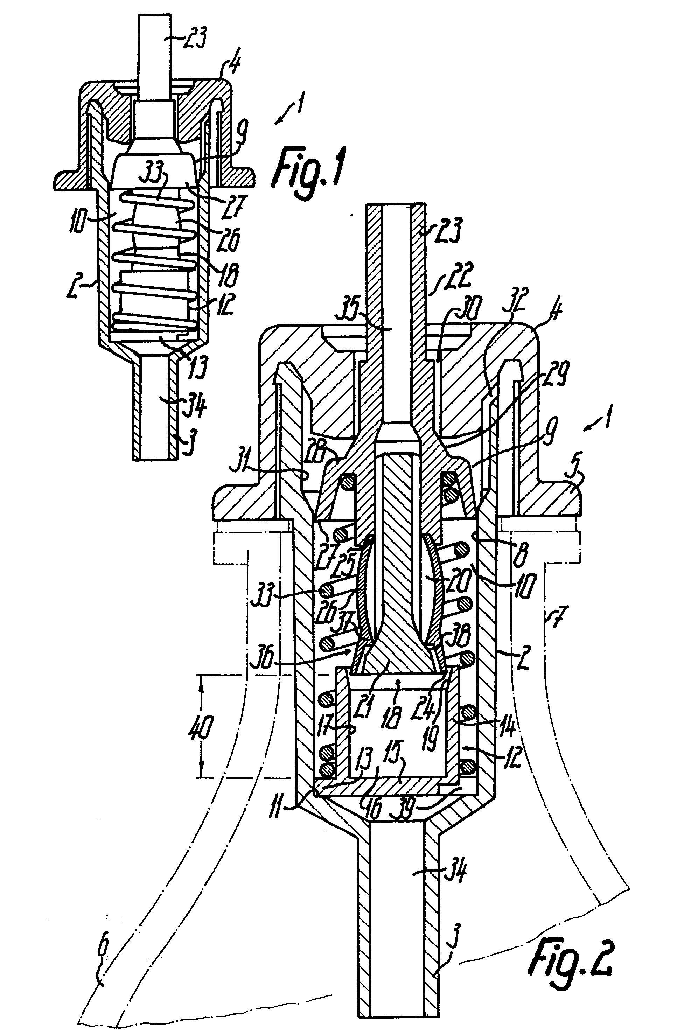

Die Schubkolben-Pumpe 1 gemäss den Fig. 1 und 2 weist ein im wesentlichen achssymmetrisches Pumpengehäuse 2 auf, das am Inneren, in einen Wirkstoff-Speicher 6 einzusetzenden Ende in einen gegenüber seinem Aussendurchmesser verengten Anschlussstutzen 3 für die Verbindung mit einem nicht näher dargestellten Saug- bzw. Steigrohr übergeht und am anderen, erweiterten Ende mit einer Gehäusekappe 4 verschlossen ist, die einen Ringflansch 5 zur abgedichteten Befestigung am Hals 7 des strichpunktiert angedeuteten Wirkstoffspeichers 6 aufweist.

Die Innenfläche des Pumpengehäuses 2 bildet eine Kolben-Laufbahn 8 für einen Vorsaugkolben 9 und umschliesst eine diesem Vorsaugkolben 9 zugehörige Vorsaugkammer 10. An eine am Übergang des Pumpengehäuses 2 in den Anschlussstutzen 3 vorgesehene, ringschulterförmige Innenfläche 11 des Pumpengehäuses 2 ist ein im wesentlichen zylindrischer Kammerkörper 12 mit einem Ringflansch 13 angelegt, dessen Aussendurchmesser dem Innendurchmesser des Pumpengehäuses 2 im Bereich der Innenfläche 11 entspricht, wobei die Innenwand des Pumpengehäuses 2 bis zur Innenfläche 11 auf dem Durchmesser der Kolben-Laufbahn 8 durchgeht. Der napfförmige Kammerkörper 12, der in vorteilhafter Weise auch einstückig mit dem Pumpengehäuse 2 ausgebildet sein kann, weist einen im wesentlichen zylindrischen Mantel 14 und eine in der Ebene des Ringflansches 13 liegende ebene Bodenwand 15 auf und ist durch den Umfang des Ringflansches 13 achsgleich zur Vorsaugkammer 10 zentriert.

Durch den Mantel 14 und die Bodenwand 15 ist eine zylindrische Pumpenkammer 16 begrenzt, deren Durchmesser etwa gleich ihrer Axialerstreckung ist. Die Wandungsfläche der Pumpenkammer 16 bildet bis zur Innenfläche der Bodenwand 15 eine Kolbenlaufbahn 17 für einen Pumpkolben 18, der achsgleich und lagestarr mit dem Vorsaugkolben 9 verbunden sowie gegenüber dem Vorsaugkolben 9 um weniger als dessen Aussendurchmesser zum Anschlussstutzen 3 hin versetzt ist. Die Kolbenlaufbahn 17 ist an ihrem vom geschlossenen Ende der Pumpenkammer 16 abgekehrten Ende 19 spitzwinklig konisch bis auf einen in der zugehörigen Endfläche des Mantels 14 liegenden Durchmesser erweitert, der geringfügig derart grösser als der grösste Aussendurchmesser des Pumpkolbens 18 ist, dass dieser beim Pumphub etwa auf der Hälfte der Länge dieses Endes 19 in Berührung mit der Kolbenlaufbahn 17 kommt; die Länge des Endes 19 entspricht nur etwa einem Viertel der Länge der übrigen Kolbenlaufbahn 17.

Der Pumpkolben 18 ist durch einen zentralen, schaft- bzw. stempelförmigen Kernteil 21 eines in den Achsen beider Kolben liegenden zweiteiligen Kolbenschaftes 20 gebildet, dessen anderer, rohrförmiger Schaftteil 22 einteilig mit dem Vorsaugkolben 9 ausgebildet ist, die Stirnwand der Gehäusekappe 4 in der Pumpenachse durchsetzt und mit einem Austragstutzen 23 über die Aussenseite der Gehäusekappe 4 vorsteht. Das im Aussendurchmesser erweiterte Ende des Kernteiles 21 ist von einer ring- bzw. hülsenförmigen Kolben-Dichtlippe 24 mit einem Spaltabstand umgeben, die frei ausragend zur geschlossenen Stirnwand der Pumpenkammer 16 spitzwinklig konisch erweitert und im Bereich ihres hinteren Endes am Aussenumfang des Kernteiles 21 radial und/oder axial abgestützt ist. Die für die Anlage des Pumpkolbens 18 an der Kolbenlaufbahn 17 bestimmte Endkante der Dichtlippe 24 liegt in der Ebene der freien Stirnfläche des Kernteiles 21.

Die Dichtlippe 24 ist durch das zugehörige Ende einer in der gestreckten Ruhelage zwischen dem hinteren Ende der Dichtlippe 24 und ihrem anderen Ende 25 bauchig aufgeweiteten Stauchhülse 26 aus gummielastischem Werkstoff gebildet, die mit ihrem von der Dichtlippe 24 abgekehrten Ende 25 druckdicht zwischen das zugehörige Ende des Schaftteiles 22 und den zentriert in dieses Ende mit seinem vom Pumpkolben 18 abgekehrten Endabschnitt eingreifenden Kernteil 21 eingespannt ist.

Der Vorsaugkolben 9 ist im wesentlichen durch eine gleichgerichtet wie die Dichtlippe 24 spitzwinklig konisch erweiterte, manschettenartige Kolben-Dichtlippe 27 gebildet, die mit ihrem von der Pumpenkammer 16 abgekehrten Ende über eine ringförmige Stirnwand 28 einteilig in den zugehörigen Abschnitt des Schaftteiles 22 des Kolbenschaftes 20 übergeht und in dessen Ausgangslage nahe benachbart zur muffenförmig in das Pumpengehäuse 2 ragenden Stirnwand der Gehäusekappe 4 liegt. Im Anschluss an die Stirnwand 28 ist der Aussendurchmesser des Kolbenschaftes 20 nach aussen konisch verjüngt, derart, dass dieser konische Abschnitt 29 bei Ausgangslage dichtend an der inneren Endkante der in der Gehäusekappe 4 vorgesehenen Durchgangsöffnung 30 für den Kolbenschaft 20 anliegt. Das innere Ende des Schaftteiles 22 steht zum Pumpkolben 18 geringfügig weiter vor als die Dichtlippe 27.

In Ausgangslage liegt die Dichtlippe 27 am zugehörigen, von der Pumpenkammer 16 abgekehrten Ende der Laufbahn 8 an, die unmittelbar hinter dieser Anlagestelle über eine schräge Ringschulter in einen erweiterten Abschnitt 31 der Innenfläche des Pumpengehäuses 2 übergeht, in welchen die Gehäusekappe 4 eingreift. Der vom Vorsaugkolben 9, dem Abschnitt 31 und der Gehäusekappe 4 begrenzte Raum kann über den Ringspalt zwischen der Durchgangsöffnung 30 und dem Kolbenschaft 20 und/oder durch einen in der Wandung des Pumpengehäuses 2 vorgesehenen Belüftungskanal 32 be- bzw. entlüftet sein.

Zur Ausgangslage sind die beiden lagestarr miteinander verbundenen Kolben durch eine Rückstellfeder 33 in Form einer Schraubengangfeder belastet, die einerseits innerhalb der Dichtlippe 27 an der Innenfläche der Stirnwand 28 des Vorsaugkolbens 9 und mit ihrem anderen Ende an der von der Innenfläche 11 abgekehrten Stirnfläche des Ringflansches 13 mit Vorspannung anliegt. Im Bereich des Ringspaltes zwischen dem Mantel 14 des Kammerkörpers 12 und dem Pumpengehäuse 2 umgibt die achsgleich zur Pumpe liegende Rückstellfeder 33 den Kammerkörper 12, wie sie im anschliessenden Bereich die Stauchhülse 26 umgibt.

Der Anschlussstutzen 3 begrenzt einen Ansaugkanal 34, während der Kolbenschaft 20 mit der Dichtlippe 24 und der Stauchhülse 26 einen Austragkanal 35 begrenzt. Letzterer ist im Bereich des Kernteiles 21 dadurch gebildet, dass der Kernteil hinter der Abstützung der Dichtlippe 24 an seinem Aussenumfang bis an das in dem Schaftteil 22 liegende Ende reichende Längsnuten aufweist. Vor der Abstützung der Dichtlippe 24 am Aussenumfang des Kernteiles 21 ist der Austragkanal durch den Ringspalt zwischen der Dichtlippe 24 und dem Kernteil 21 gebildet.

Die Dichtlippe 24 bildet mit dem Ende 19 der Kolbenlaufbahn ein schiebergesteuertes Ventil. In dem Austragkanal 35 ist ein weiteres Ventil 36 in Form eines bei entsprechendem Überdruck in der Pumpenkammer 16 öffnenden Überdruckventiles angeordnet, dessen die Öffnungs- und Schliessbewegungen ausführender, als Ventilschliessteil vorgesehener Ventilteil 37 durch diejenige Zone der Dichtlippe 24 bzw. der Stauchhülse 26 gebildet ist, mit welcher die Dichtlippe 24 am Aussenumfang des Kernteiles 21 abgestützt ist. Der zugehörige als Ventilsitz vorgesehene Ventilteil 38 ist durch die in diesem Bereich zum freien Ende konisch erweiterte Umfangsfläche des Kolbenschaftes bzw. des Kernteiles 21 gebildet.

Der Ventilschliessteil 37 ist im wesentlichen durch eine radial nach innen über die Dichtlippe 24 bzw. die Stauchhülse 26 vorstehende Dichtlippe gebildet, deren zum freien Ende des Pumpkolbens 18 hin liegende ringförmige Flanke zweckmässig rechtwinklig zur Kolbenachse liegt, während die andere Flanke zum freien Ende des Pumpkolbens 18 spitzwinklig konisch verjüngt ist und vorzugsweise eine kontinuierliche Fortsetzung der bauchigen Innenfläche der Stauchhülse 26 bildet. Der Ventilschliessteil 27 wird durch die zur gestreckten Lage tendierende Vorspannung der Stauchhülse 26 federnd gegen den Ventilsitz 38 mit einem vorbestimmten Schliessdruck gepresst.

Der Ringflansch 13 des Kammerkörpers 12 ist von mindestens einer die Vorsaugkammer 10 mit dem Ansaugkanal 34 ständig, d. h. ventilfrei verbindenden Durchtrittsöffnung 39 versehen. Werden die Kolben beim Pumphub gegen die Kraft der Rückstellfeder 33 einwärts gedrückt, so schliesst die Dichtlippe 24 nach kurzer Hubstrecke durch Auflaufen auf das Ende 19 der Kolbenlaufbahn 17 die Pumpenkammer 16 druckdicht und baut im weiteren Verlauf des bei 40 angedeuteten Pumphubes den Druck in der Pumpenkammer 16 auf. Nach einer bestimmten Teilstrecke des Pumphubes 40 ist der vorbestimmte Öffnungsdruck des Ventiles 36 erreicht, so dass dieses bei fallender Federkennlinie der Stauchhülse 26 schlagartig öffnet und unter dem Überdruck sowie der Reststrecke des vom Pumpkolben 18 ausgeführten Pumphubes im wesentlichen die gesamte in der Pumpenkammer 16 eingeschlossene Menge an Wirkstoff durch den Austragkanal 35 ausgetragen wird. In der Endstellung liegen die Dichtlippe 24 und/oder der Kolbenschaft 20 mit ihren zugehörigen Endflächen an der Innenfläche der Bodenwand 15 an, ohne dass das Ventil 36 in dieser Stellung durch die Dichtlippe 24 daran gehindert wäre, unter der Rückstellkraft der Stauchhülse 26 zu schliessen.

Mit dem Pumphub bewegt sich auch der Vorsaugkolben 9 simultan und mit gleichem Kolbenweg in die Vorsaugkammer 10, so dass über den Ansaugkanal 34 im Speicher 6 der Druck erhöht bzw. aufgeladen wird.

Beim Rückhub wird wegen der allseits geschlossenen Pumpenkammer 16 in dieser ein hoher Unterdruck aufgebaut, während der Vorsaugkolben 9 über den Ansaugkanal 34 und die Durchtrittsöffnung 39 Wirkstoff aus dem Speicher 6 in die Vorsaugkammer 10 derart ansaugt, dass die noch geschlossene Pumpenkammer 16 von Wirkstoff umflutet ist. Am Ende des Rückhubes öffnet der Pumpkolben 18 durch Abheben der Dichtlippe 24 von der Kolbenlaufbahn 17 das offene Ende des Kammerkörpers 12, so dass in diesen der in der Vorsaugkammer 10 befindliche Wirkstoff so angesaugt wird, dass die Pumpenkammer 16 vollständig gefüllt wird.

Beim Erstgebrauch der Kolbenpumpe 1, bei welchem diese noch von Wirkstoff leer, also mit Luft gefüllt ist, kann durch einen oder wenige Pumphübe die in der Pumpe befindliche Luft in der beschriebenen Weise ausgetrieben und die Pumpe mit Wirkstoff gefüllt werden.

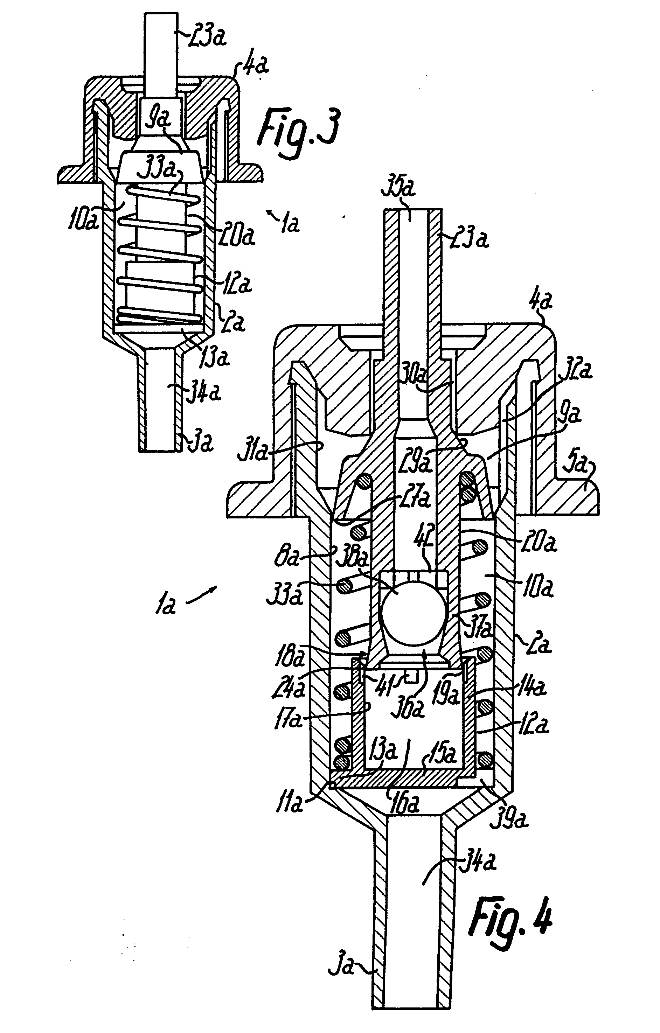

In den Fig. 3 und 4 sind für einander entsprechende Teile die gleichen Bezugszeichen wie in den Fig. 1 und 2, jedoch mit dem Index «a» verwendet.

Bei der Ausführungsform gemäss den Fig. 3 und 4 sind der Vorsaugkolben 9a, der Pumpkolben 18a und der Kolbenschaft 20a durch einen einzigen einstückigen Bauteil gebildet. Die Kolbenlaufbahn 17a des Kammerkörpers 12a ist bis zu dessen offenem Ende durchgehend gleich weit und im dargestellten Ausführungsbeispiel zylindrisch. An ihrem zugehörigen Ende 19a ist die Kolbenlaufbahn 17a mit nutförmigen Längsschlitzen 41 versehen, welche beim entsprechenden Abschnitt des Pump- und Rückhubes durch die Dichtlippe 24a des Pumpkolbens 18a derart freigegeben werden, dass die Pumpenkammer 16a zur Vorsaugkammer 10a geöffnet ist. Sobald die Dichtlippe 24a beim Pumphub die Längsschlitze 41 überlaufen hat, ist die Pumpenkammer 16a druckdicht geschlossen.

Das weitere Ventil 36a ist in einfacher Weise als sogenanntes Schlauchventil ausgebildet, das einen, einen kugelförmigen Ventilkörper 38a mit Vorspannung umgebenden, schlauchförmigen elastischen Abschnitt 37a des Kolbenschaftes 20a aufweist. Von der Anlage am Ventilkörper 38a ist die Innenfläche des Abschnittes 37a zur Pumpenkammer 16a hin spitzwinklig konisch verjüngt, während sie zur anderen Seite hin, also in Austragrichtung, konstante Querschnitte aufweist und in ein mit Durchlässen versehenes Abstützungsglied 42 für den Ventilkörper 38a übergeht, so dass dieser beim Öffnen und Schliessen des Ventiles 36a keine Axialbewegungen ausführt.

Dadurch ist ein Ventil 36a geschaffen, das nur aus zwei Teilen besteht, die auf einfache Weise mit hinreichend genauen Fertigungstoleranzen auch dann gefertigt werden können, wenn die Kolbenpumpe 1a sehr klein ausgebildet ist. Auch bei dieser Ausführungsform ist der Pumphub eindeutig durch Anschlag des Pumpkolbens 18a am Boden 15a begrenzt, so dass genau dosierte Mengen ausgetragen werden können. Bei Übersteigen des Schliessdruckes des Ventiles 36a wird der Abschnitt 37a entgegen seiner radial nach innen gerichteten Vorspannung aufgeweitet, wodurch um den Ventilkörper 38a ein ringförmiger Durchlassspalt freigegeben wird, durch welchen der Wirkstoff in den Austragkanal 35a übertreten kann.

## Patentansprüche

1. Schubkolben-Pumpe für Wirkstoff-Spender, zum wiederholbaren Ausbringen von Wirkstoffen, wie pharmazeutischen Zubereitungen, mit einem aus einer Ausgangslage über einen Pumphub (40) in einem Pumpenzylinder geführten Pumpkolben (18), dessen zugehörige Pumpenkammer (16) an zwei Kanäle, nämlich einerseits zur Wirkstoffansaugung über eine Vorsaugkammer (10) eines Vorsaugkolbens (9) an einen in einem Wirkstoff-Speicher (6) anzuordnenden Ansaugkanal (34) und andererseits für den Wirkstoffaustrag an einen Austragkanal (35) angeschlossen ist, wobei die Pumpenkammer (16) eingangsseitig nach Art eines schiebergesteuerten Ventiles ausschliesslich bei einem an die Ausgangsstellung anschliessenden Teilhub des Pumphubes (40) zur Vorsaugkammer (10) des mit dem Pumpkolben (18) laufenden Vorsaugkolbens (9) geöffnet ist, dadurch gekennzeichnet, dass einer der beiden Kanäle durch ein weiteres, differenzdruckabhängig öffnendes Ventil (36) schliessbar ist und dass die Pumpenkammer (16) als bis vor Ende des Rückhubes geschlossene und am Ende des Rückhubes aus der Vorsaugkammer (10) ansaugende Unterdruckkammer ausgebildet ist.

2. Pumpe nach Anspruch 1, dadurch gekennzeichnet, dass das weitere Ventil (36) als dem Austragkanal (35) zugeordnetes und insbesondere mit der Öffnung eine fallende Federkennlinie aufweisendes Überdruckventil ausgebildet sowie an dem Pumpkolben (18) angeordnet ist, wobei vorzugsweise die der Kolbenlaufbahn (17) für den Pumpkolben (18) zugeordnete, die Pumpenkammer (16) öffnende Dichtlippe (24) des Pumpkolbens (18) den zur Öffnung bewegbaren Ventilteil des weiteren Ventiles (36) bildet.

3. Pumpe nach Anspruch 1 oder 2, dadurch gekennzeichnet, dass einer der beiden gegeneinander beweglichen Ventilteile (37, 38; 37a, 38a) des weiteren Ventiles (36, 36a) durch einen Abschnitt des Pumpkolbens (18, 18a) gebildet ist, wobei vorzugsweise der Pumpkolben (18) eine im Bereich eines Endes die zugehörige Kolben-Dichtlippe (24) bildende, den Austragkanal (35) in ihrem Bereich am Aussenumfang begrenzende und am Kolbenschaft (20) im Bereich des anderen Endes gelagerte Stauchhülse (26) aufweist, die am Innenumfang einen ringförmigen Ventilschliessteil (37) bildet, welchem ein Ventilsitz (38) am Kolbenschaft (20) zugeordnet ist.

4. Pumpe nach einem der Ansprüche 1 bis 3, dadurch gekennzeichnet, dass das weitere Ventil (36a) durch ein Schlauchventil gebildet ist, das vorzugsweise durch einen elastischen, einen Ventilkörper (38a), wie eine Kugel, mit Vorspannung umgebenden Abschnitt (37a) des Kolbenschaftes (20a) gebildet ist.

5. Pumpe nach einem der vorhergehenden Ansprüche, dadurch gekennzeichnet, dass der Pumpkolben (18, 18a) in Ausgangsstellung das zugehörige konisch erweiterte oder mit Längsschlitzen (41) versehene Ende (19, 19a) der ansonsten allseits geschlossenen Pumpenkammer (16, 16a) nach Art einer Schiebersteuerung öffnet und dass vorzugsweise wenigstens dieses Ende (19, 19a) der Pumpenkammer (16, 16a) in der Vorsaugkammer (10, 10a) liegt.

6. Pumpe nach einem der vorhergehenden Ansprüche, dadurch gekennzeichnet, dass das offene Ende der Pumpenkammer (16) zur Umflutung mit dem vorgesaugten Wirkstoff spaltartig von der Vorsaugkammer (10) umgeben ist, wobei die Pumpenkammer (16) vorzugsweise einen bis zu einer Bodenwand (15) reichenden Mantel (14) aufweist, der spaltartig von der Vorsaugkammer (10) umgeben ist.

7. Pumpe nach einem der vorhergehenden Ansprüche, dadurch gekennzeichnet, dass der Vorsaugkolben (9) mit dem Pumpkolben (18) gleichsinnig laufend und die Vorsaugkammer (10) mit der Pumpenkammer (16) beim Pumphub gemeinsam unter Druck stehend angeordnet sind, wobei vorzugsweise der Vorsaugkolben (9) und der Pumpkolben (18) axial zueinander im wesentlichen lagestarr an einem gemeinsamen, den Austragkanal (35) enthaltenden Kolbenschaft (20) oder dgl. angeordnet sind.

8. Pumpe nach einem der vorhergehenden Ansprüche, dadurch gekennzeichnet, dass die Pumpenkammer (16) durch einen napfförmigen Kammerkörper (12) gebildet ist, der vorzugsweise vollständig in der Vorsaugkammer (10) und im wesentlichen achsgleich zu dieser liegt und insbesondere als gesonderter oder einstückig mit dem Pumpengehäuse ausgebildeter Teil lagestabil gegenüber der Innenfläche (11) der Vorsaugkammer (10) ausgerichtet ist.

9. Pumpe nach einem der vorhergehenden Ansprüche, dadurch gekennzeichnet, dass die Pumpenkammer (16) ringspaltartig von der Vorsaugkammer (10) umgeben und mit Wandabstand in der Vorsaugkammer (10) angeordnet sowie vorzugsweise mit einem über den Umfang des Kammerkörpers (12) vorstehenden, in der Ebene von dessen Bodenwand (15) liegenden, mindestens eine Durchtrittsöffnung (39) aufweisenden Ringflansch (13) im Bereich einer schulterförmigen Innenfläche (11) der Vorsaugkammer (10) abgestützt ist.

10. Pumpe nach einem der vorhergehenden Ansprüche, dadurch gekennzeichnet, dass der Vorsaugkolben (9) grösseren Kolbenquerschnitt als der Pumpkolben (18) aufweist.

11. Pumpe nach einem der vorhergehenden Ansprüche, dadurch gekennzeichnet, dass der Vorsaugkolben (9) und der Pumpkolben (18) in einem die Vorsaugkammer (10) umschliessenden, an einem Ende in den Ansaugkanal (34) übergehenden und am anderen Ende mit einer vom Kolbenschaft (20) durchsetzten Gehäusekappe (4) verschlossenen Pumpengehäuse (2), hintereinander liegen, wobei vorzugsweise der Pumpkolben (18) näher beim Ansaugkanal (34) liegt als der Vorsaugkolben (9).

12. Pumpe nach einem der vorhergehenden Ansprüche, dadurch gekennzeichnet, dass der Vorsaugkolben (9) und der Pumpkolben (18) mit einer am Vorsaugkolben (9) abgestützten Rückstellfeder (33) zur Ausgangsstellung federbelastet sind und dass vorzugsweise die Rückstellfeder (33) in Form einer Schraubendruckfeder den Kammerkörper (12) umgibt bzw. den Kammerkörper (12) gegen die schulterförmige Innenfläche (11) drückt.

13. Pumpe nach einem der vorhergehenden Ansprüche, dadurch gekennzeichnet, dass der Vorsaugkolben (9a) und der Pumpkolben (18a) bzw. mindestens ein Kolben (9) und der Kolbenschaft (20) einteilig aus einem gummielastischen Kunststoff ausgebildet sind.

## Claims

1. Thrust piston pump for an active substance dispenser for the reproducible discharge more particularly of pharmazeutical products, with a pump piston (18) guided in a pump cylinder from a starting position over a piston stroke (40) and whose associated pump chamber (16) is connected to two ducts, namely on the one hand for active substance suction via a presuction chamber (10) of a presuction piston (9) to a suction duct (34) to be arranged in an active substance dispenser (6) and on the other hand for active substance discharge to a discharge duct (35), whereby on the intake side the pump chamber (16) in the manner of a sliding-controlled valve is only opened during a partial pump stroke (40) following onto the starting position towards the presuction chamber (10) of the presuction piston (9) running with the pump piston (18), characterized in that one of the two ducts can be closed by a further, differential pressure-dependently opening valve (36) and that the pump chamber (16) is constructed as a vacuum chamber closed to before the end of the return stroke and sucking from the presuction chamber (10) at the end of the return stroke.

2. Pump according to claim 1, characterized in that the further valve (36) is constructed as a pressure relief valve associated with the discharge duct (35) and in particular having a falling spring characteristic with the opening and is arranged on the pump piston (18), preferably the packing lip (24) of pump piston (18) associated with the piston path (17) for piston (18) and which opens the pump chamber (16) forms the part of the further valve (36) movable for opening purposes.

3. Pump according to claims 1 or 2, characterized in that one of the two parts (37, 38; 37a, 38a) of the further valve (36, 36a) movable opposite to one another is formed by a portion of the pump piston (18, 18a) and preferably the piston (18) has a compression sleeve (26) forming in the vicinity of one end the associated piston packing lip (24), defining the discharge duct (35) in its area on the outer circumference and mounted on the piston shaft (20) in the vicinity of the other end and which on the inner circumference forms a circular valve closing part (37), with which is associated a valve seat (38) on the piston shaft (20).

4. Pump according to one of the claims 1 to 3, characterized in that the further valve (36a) is formed by a hose valve, which is preferably formed by an elastic portion (37a) of piston shaft (20a) surrounding with pretension a valve body (38a), such as a ball.

5. Pump according to one of the preceding claims, characterized in that in the starting position the pump piston (18, 18a) opens the associated conically widened or longitudinally-slotted (41) end (19, 19a) of the otherwise all-sided closed pump chamber (16, 16a) in the manner of a slide control and that preferably at least this end (19, 19a) of pump chamber (16, 16a) is located in the presuction chamber (10, 10a).

6. Pump according to one of the preceding claims, characterized in that the open end of the pump chamber (16) is surrounded in gaplike manner by the presuction chamber (10) for flooding with the previously sucked in active substance, the pump chamber (16) preferably having a circumferential casing (14) extending up to a bottom wall (15) and which is surrounded in gap-like manner by the presuction chamber (10).

7. Pump according to one of the preceding claims, characterized in that the presuction piston (9) and the pump piston (18) travel in the same direction and the presuction chamber (10) and the pump chamber (16) are jointly under pressure during the pump stroke and preferably the presuction piston (9) and the pump piston (18) are arranged axially to one another in a substantially position-fixed manner on a common piston shaft (20) or the like containing the discharge duct (35).

8. Pump according to one of the preceding claims, characterized in that the pump chamber (16) is formed by a cup-shaped chamber body (12) which is preferably entirely located in the presuction chamber (10) and is substantially equiaxial thereto and in particular as a separate part or a part constructed in one piece with the pump casing is oriented in positionally stable manner with respect to the inner surface (11) of presuction chamber (10).

9. Pump according to one of the preceding claims, characterized in that the pump chamber (16) is surrounded in annular clearance-like manner by the presuction chamber (10) and is arranged with wall spacing in presuction chamber (10) and is supported in the vicinity of a shoulder-like inner surface (11) of the presuction chamber (10) by an annular flange (13) projecting over the circumference of chamber body (12), located in the plane of its bottom wall (15) and having at least one passage opening (39).

10. Pump according to one of the preceding claims, characterized in that the presuction piston (9) has a larger piston cross-section than pump piston (18).

11. Pump according to one of the preceding claims, characterized in that the presuction piston (9) and the pump piston (18) are successively located in a pump casing (2) surrounding the presuction chamber (10), at one end passing into the suction duct (34) and at the other end closed by a casing cap (4) traversed by the piston shaft (20) and preferably the pump piston (18) is nearer to the suction duct (34) than the presuction piston (9).

12. Pump according to one of the preceding claims, characterized in that the presuction piston (9) and the pump piston (18) are spring loaded towards the starting piston by a return spring (33) supported on the presuction piston (9) and that preferably the return spring (33) surrounds the chamber body (12) in the form of a helical compression spring or presses the chamber body (12) against the shoulder-like inner surface (11).

13. Pump according to one of the preceding claims, characterized in that the presuction piston (9a) and the pump piston (18a) or at least one piston (9) and the piston shaft (20) are constructed in one piece from a rubber-elastic plastic.

**Revendications**

1. Pompe à piston coulissant pour distributeur de substances actives, en vue de la délivrance répétitive de substances actives telles que des préparations pharmaceutiques, présentant un piston de pompage (18) qui est animé d'une course de pompage (40) dans un cylindre de pompe à partir d'une position initiale, et dont la chambre de pompage associée (16) est raccordée à deux canaux, c'est-à-dire, d'une part en vue de l'aspiration de la substance active par l'intermédiaire d'une chambre d'aspiration préalable (10) d'un piston d'aspiration préalable (9), à un canal d'aspiration (34) devant être logé dans un accumulateur (6) de substances actives et, d'autre part, à un canal de sortie (35) pour la sortie de la substance active, la chambre de pompage (16) étant ouverte côté entrée à la manière d'une valve commandée par tiroir, exclusivement selon un trajet partiel de la course de pompage (40) succédant à la position initiale, vers la chambre d'aspiration préalable (10) du piston d'aspiration préalable (9) mobile avec le piston de pompage (18), caractérisée par le fait que l'un des deux canaux peut être obturé par l'intermédiaire d'une soupape additionnelle (36) s'ouvrant en fonction de la pression différentielle; et par le fait que la chambre de pompage (16) est réalisée sous la forme d'une chambre de dépression qui est fermée jusqu'à l'instant précédant la fin de la course de retour, et qui aspire hors de la chambre d'aspiration préalable (10), à l'achèvement de cette course de retour.

2. Pompe selon la revendication 1, caractérisée par le fait que la soupape additionnelle (36) est réalisée sous la forme d'une soupape de surpression qui est associée au canal de sortie (35) et présente notamment une caractéristique d'élasticité décroissante en phase d'ouverture, cette soupape étant également installée sur le piston de pompage (18), la lèvre d'étanchéité (24) du piston de pompage (18), qui ouvre la chambre de pompage (16) et est associée à la piste de coulissement (17) dudit piston de pompage (18), formant de préférence la partie de la soupape additionnelle (36) qui est mobile en vue de l'ouverture.

3. Pompe selon l'une des revendications 1 ou 2, caractérisée par le fait que l'une des deux parties mutuellement mobiles (37, 38; 37a, 38a) de la soupape additionnelle (36, 36a) est formée par une région du piston de pompage (18, 18a), ce piston de pompage (18) présentant, de préférence, une douille de refoulement (26) qui forme au voisinage d'une extrémité la lèvre d'étanchéité associée (24) de ce piston, qui délimite le canal de sortie (35) dans sa région située sur le pourtour extérieur et qui est montée sur la tige (20) du piston au voisinage de l'autre extrémité, cette douille formant, sur le pourtour intérieur, une partie obturatrice annulaire (37) à laquelle est associé un siège (38) de soupape, ménagé sur la tige (20) du piston.

4. Pompe selon l'une des revendications 1 à 3, caractérisée par le fait que la soupape additionnelle (36a) est formée par une soupape à tube souple constituée, de préférence, par une région élastique (37a) de la tige (20a) du piston qui entoure, avec précharge, un corps obturateur (38a) tel qu'une bille.

5. Pompe selon l'une des revendications précédentes, caractérisée par le fait que, dans la position initiale, le piston de pompage (18, 18a) ouvre à la manière d'une commande par tiroir l'extrémité associée (19, 19a), s'évasant coniquement ou munie de fentes longitudinales (41), de la chambre de pompage (16, 16a) pour le reste fermée entièrement; et par le fait que, de préférence, au moins cette extrémité (19, 19a) de la chambre de pompage (16, 16a) se trouve dans la chambre d'aspiration préalable (10, 10a).

6. Pompe selon l'une des revendications précédentes, caractérisée par le fait que l'extrémité ouverte de la chambre de pompage (16) est entourée par la chambre d'aspiration préalable (10) en ménageant un interstice, afin d'être baignée circonférentiellement par les substances actives pré-aspirées, la chambre de pompage (16) présentant, de préférence, une enveloppe (14) qui s'étend jusqu'à une paroi de fond (15) et est entourée par la chambre d'aspiration préalable (10), en réservant un interstice.

7. Pompe selon l'une des revendications précédentes, caractérisée par le fait que le piston d'aspiration préalable (9) et le piston de pompage (18) sont agencés pour coulisser dans le même sens, et la chambre d'aspiration préalable (10) et la chambre de pompage (16) sont agencées pour être mises conjointement sous pression lors de la course de pompage, le piston d'aspiration préalable (9) et le piston de pompage (18) étant de préférence disposés, axialement l'un par rapport à l'autre et en occupant des positions pour l'essentiel fixes, dans une tige commune (20) de piston ou élément similaire renfermant le canal de sortie (35).

8. Pompe selon l'une des revendications précédentes, caractérisée par le fait que la chambre de pompage (16) est formée par un corps (12) configuré en écuelle, qui se trouve de préférence intégralement dans la chambre d'aspiration préalable (10), pour l'essentiel coaxialement à cette dernière, et est notamment orienté, en tant que pièce distincte ou ménagée d'un seul tenant avec le carter de la pompe, selon une position stable par rapport à la surface interne (11) de la chambre d'aspiration préalable (10).

9. Pompe selon l'une des revendications précédentes, caractérisée par le fait que la chambre de pompage (16) est entourée par la chambre d'aspiration préalable (10) en réservant un interstice annulaire, est disposée dans cette chambre d'aspiration préalable (10), à distance de sa paroi, et prend de préférence appui, au voisinage d'une surface interne en forme d'épaulement (11) de la chambre d'aspiration préalable (10), par une aile annulaire (13) qui dépasse au-delà du pourtour du corps (12) de cette chambre, est située dans le plan de la paroi de fond (15) de celle-ci et est percée d'au moins un orifice de passage (39).

10. Pompe selon l'une des revendications précédentes, caractérisée par le fait que le piston d'aspiration préalable (9) présente une plus grande section que le piston de pompage (18).

11. Pompe selon l'une des revendications précédentes, caractérisée par le fait que le piston d'aspiration préalable (9) et le piston de pompage (18) sont agencés, en succession, dans un carter (2) de pompe qui ceinture la chambre d'aspiration préalable (10), se confond à une extrémité dans le canal d'aspiration (34) et est obturé, à l'autre extrémité, par un capuchon (4) traversé par la tige (20) du piston, le piston de pompage (18) étant de préférence plus rapproché du canal d'aspiration (34) que le piston d'aspiration préalable (9).

12. Pompe selon l'une des revendications précédentes, caractérisée par le fait que le piston d'aspiration préalable (9) et le piston de pompage (18) sont chargés élastiquement, à la position initiale, par un ressort de rappel (33) prenant appui contre le piston d'aspiration préalable (9); et par le fait que, de préférence, le ressort de rappel (33) revêtant la forme d'un ressort hélicoïdal de pression entoure le corps (12) de la chambre, ou presse respectivement ce corps (12) de la chambre contre la surface interne (11) en forme d'épaulement.

13. Pompe selon l'une des revendications précédentes, caractérisée par le fait que le piston d'aspiration préalable (9a) et le piston de pompage (18a), respectivement au moins un piston (9) et la tige (20) de piston, sont façonnés d'un seul bloc en une matière plastique douée de l'élasticité du caoutchouc.

Fig.1

Fig.2

Fig.3

Fig.4